# EUROPEAN PATENT APPLICATION

(11) **EP 2 034 636 A1**
(43) Date of publication of application: **11.03.2009**
(21) Application number: 07017416.4
(22) Date of filing: 05.09.2007
(51) Int. Cl.: H04B 10/158, H04B 10/18

(54) **Receiver and method for operating said receiver**

(71) Applicant: Nokia Siemens Networks Oy, 02610 Espoo (FI)
(72) Inventor: Alfiad, Mohammad S., 5621 BC Eindhoven (NL); Napoli, Antonio, Dr., 80802 München (DE); Van den Borne, Dirk, 81379 München (DE)
(74) Representative: Bruglachner, Thomas E.

(57) **Abstract**

A receiver is provided comprising (i) a phase demodulator, and (ii) an electronic dispersion compensation that is connected to the phase demodulator, wherein the phase demodulator comprises a delay that is less than 1 bit. Further, a method for operating said receiver is provided.

## Description

The invention relates to a receiver and to a method for operating said receiver.

In order to reduce deployment costs of optical transmission systems it is important to design systems that are robust against transmission impairments.

One particular example of detrimental transmission impairment is chromatic dispersion. Various techniques are used commercially for chromatic dispersion compensation, e.g., inline compensation of chromatic dispersion between, e.g., fiber spans.

Another issue is a residual dispersion compensation, e.g., a compensation at the receiver. Small residual dispersion implies extensive dispersion map design thereby increasing the overall system costs. In order to compensate residual dispersion either advanced modulation formats, optical tunable dispersion compensation (TDC) or electrical signal processing can be used.

For transmission systems providing 40 Gb/s to 100 Gb/s per wavelength channel, advanced optical modulation techniques are used. For 40 Gb/s applications transmission modulation formats such as Duobinary and, more recently, differential phase shift keying are used as well as optical TDC.

Electrical signal processing is currently not utilized at transmission rates in the order of 40 Gb/s because of the limited performance of the electrical components, most notably the required analog-to-digital converters.

Hence, for 40 Gb/s applications either an optical TDC or a dispersion tolerant modulation format is applied to increase the residual dispersion tolerance.

Transponders allowing a data rate of 10 Gb/s per wavelength channel still constitute the largest share of deployed systems. As 10 Gb/s transponders are engineered for cost-effectiveness, utilizing advanced modulation formats or optical TDC is hence deemed to be too expensive. For such 10 Gb/s systems, legacy on-off-keying (OOK), in some cases Duobinary modulation, are the mostly applied modulation techniques.

Improvements in the field of electrical signal processing allowed the use of cost-effective electronic distortion compensation, most notably a maximum likelihood sequence estimation (MLSE). MLSE estimates the received data by computing a probability that a certain sequence is received, instead of computing the probability of a single bit. This can significantly improve the dispersion tolerance when combined with on-off-keying. Duobinary modulation is an alternative to improve the dispersion tolerance as it can still be realized cost-effectively and has an inherently higher dispersion tolerance compared with on-off keying.

The reach of optical transmission systems is another key issue as the use of electrical regenerators is not desirable from a cost perspective. A large number of design parameters influence the reach of a transmission system, however two of the most important parameters are the optical signal-to-noise ratio (OSNR) requirement and nonlinear tolerance of the optical modulation format. An improvement in either the nonlinear tolerance or the OSNR tolerance is therefore required hence increasing the margins available for system design.

It is a major drawback of the Duobinary modulation that it requires a higher OSNR than on-off keying (by about a 2dB), thereby limiting the transmission distance.

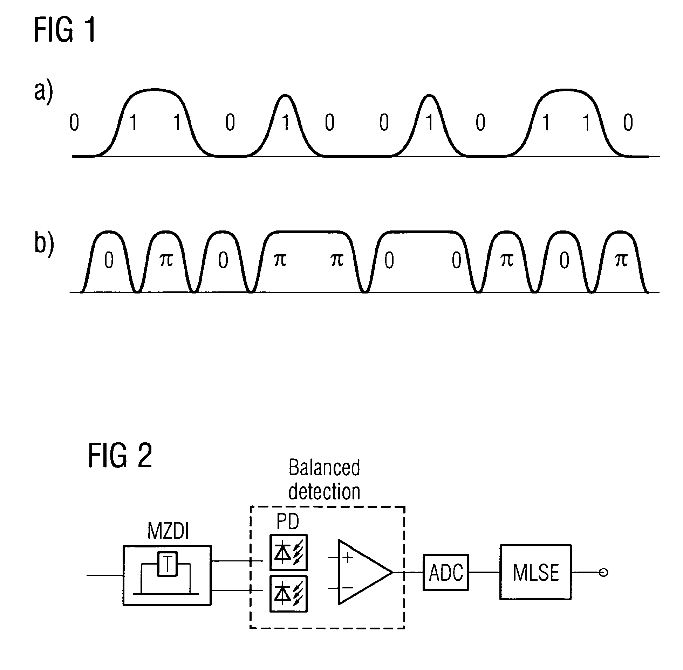

A promising modulation format to improve system reach is differential phase shift keying (DPSK). DPSK modulation encodes the information not in the amplitude but in the (differential) phase of the optical signal. A DPSK signal contains an optical pulse in each bit slot (see **Fig.1**), which helps to improve the nonlinear tolerance.

In order to detect the information with a photodiode the information is converted from the phase to the amplitude domain using a Mach-Zehnder delay interferometer (MZDI), as shown in **Fig.2****.** When DPSK is combined with balanced detection, it has a 3dB higher OSNR tolerance than OOK. It therefore allows a significant improvement in system reach. The chromatic dispersion tolerance of DPSK is however similar to OOK.

The choice of modulation format depends on a large number of requirements, with the allowable system reach and robustness against chromatic dispersion being two important parameters.

For low-cost transmission systems it has been difficult to find a modulation format that fulfils both requirements at the same time. On-off keying modulation combined with an MLSE-enabled receiver is therefore still a good choice for a low-cost 10 Gb/s transponder. To further increase the chromatic dispersion tolerance either Duobinary modulation with MLSE has been used. Increasing the system reach has however been difficult so far as MLSE detection does not increase the system reach and Duobinary modulation actually decreases it. Currently, DPSK modulation seems to be the only feasible alternative to OOK/Duobinary from a complexity/cost point-of-view. But the chromatic dispersion tolerance of DPSK (with and without MLSE) is significantly lower than the chromatic dispersion tolerance of either Duobinary or OOK+MLSE which makes it a less attractive choice.

The problem to be solved is to overcome the disadvantages as stated before and in particular to provide an approach that allows an efficient as well as cost-effective solution regarding a system reach and robustness against chromatic dispersion.

This problem is solved according to the features of the independent claims. Further embodiments result from the depending claims.

In order to overcome this problem, a receiver is provided comprising
- a phase demodulator, and
- an electronic dispersion compensation that is connected to the phase demodulator,
wherein the phase demodulator comprises a delay that is less than 1 bit.

In particular the delay of the phase demodulator amounting to less than 1 bit results in an improved system reach and a better robustness against chromatic dispersion.

In an embodiment, the phase demodulator comprises a Mach-Zehnder delay interferometer (MZDI).

In another embodiment, the electronic dispersion compensation (EDC) comprises a digital or an analog signal processing unit.

In a further embodiment, the electronic dispersion compensation comprises a maximum likelihood sequence estimation (MLSE).

In a next embodiment, the electronic dispersion compensation comprises at least one digital or analog filter structure.

Preferably, the at least one filter structure comprises at least one linear finite impulse response (FIR)-Filter and/or at least one nonlinear FIR-Filter.

It is also an embodiment that the receiver comprises a unit for converting optical signals to electrical signals. Further, the unit for converting optical signals to electrical signals may comprise a differential input stage. In particular, this unit may comprise one optical converter or two optical converters, wherein each the optical converter may comprise at least one photo diode.

Pursuant to another embodiment, the receiver can be utilized in an optical network. Said receiver can be in particular located as a separate optical component or it may be located within an optical component.

The problem stated above is also solve by a method for operating said receiver.

Embodiments of the invention are shown and illustrated in the following figures:
- Fig.3: shows a differential phase shift keying (DPSK) receiver structure with a 1 bit-delay Mach-Zehnder delay interferometer (MZDI) and matching eye diagrams;
- Fig.4: shows a receiver structure with a 0.5 bit-delay MZDI and matching eye diagrams;
- Fig.5: visualizes an optical signal-to-noise ratio (OSNR) [dB] as a function of chromatic dispersion [ps/nm] tolerance for different bit-delays within Mach-Zehnder delay interferometers comprising a hard decision processing;
- Fig.6: visualizes an OSNR[dB] as a function of chromatic dispersion [ps/nm] tolerance for different bit-delays within Mach-Zehnder delay interferometers comprising a 4-state MLSE processing;
- Fig.7: shows an OSNR) [dB] as a function of chromatic dispersion [ps/nm] tolerance between conventional OOK and DPSK with and without MLSE and with bit-delay equal to 1 bit;
- Fig.8: shows an OSNR [dB] as a function of chromatic dispersion [ps/nm] tolerance between DPSK modulation with a 0.5 bit delay MZDI for hard decision and different MLSE structures;
- Fig.9: shows an OSNR [dB] as a function of chromatic dispersion [ps/nm] tolerance between different MLSE structures for DPSK modulation.

In order to achieve a combination of long reach and high chromatic dispersion tolerance this approach in particular combines DPSK with MLSE and optimizes a Mach-Zehnder delay interferometer (MZDI) phase demodulation at the receiver such that the phase demodulator comprises a delay that is less than 1 bit.

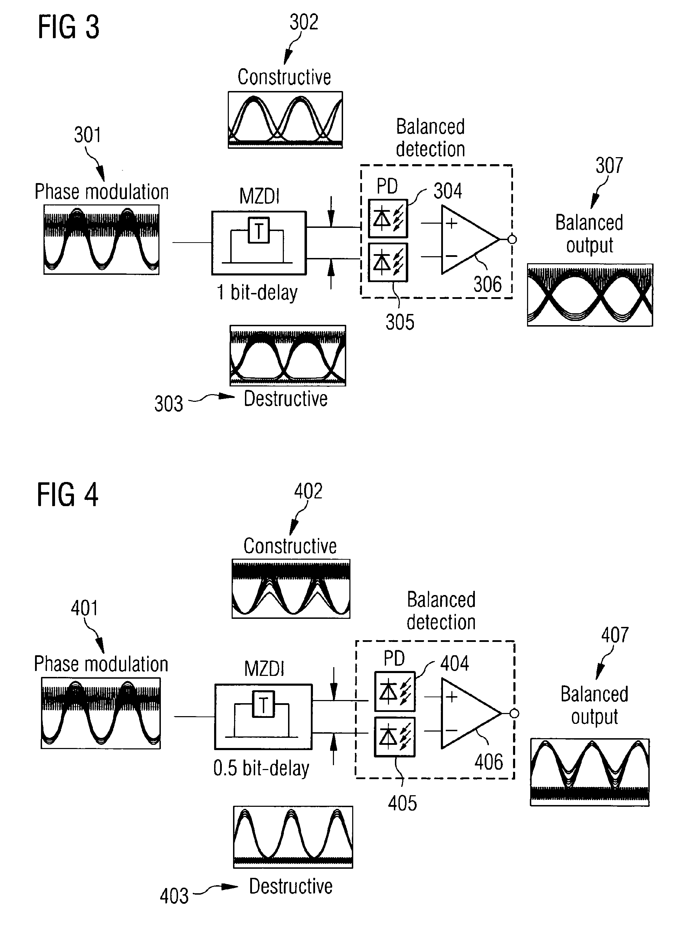

**Fig.3** shows a receiver structure with a 1 bit-delay MZDI and matching eye diagrams. A phase modulation signal 301 is fed to the MZDI providing a constructive output 302 and a destructive output 303 which are forwarded each to a photo diode 304, 305. The outputs of the photodiodes 304 and 305 are input to a differential amplifier 306 which produces a balanced output 307.

Fig.4 shows a receiver structure with a 0.5 bit-delay MZDI and matching eye diagrams. A phase modulation signal 401 is fed to the MZDI providing a constructive output 402 and a destructive output 403 which are forwarded each to a photo diode 404, 405. The outputs of the photodiodes 404 and 405 are input to a differential amplifier 406 which produces a balanced output 407.

Using a MZDI with a bit-delay of less than 1 bit the narrowband filtering tolerance can be significantly improved.

This is in particular important for 40 Gb/s DPSK applications as the penalties arising from narrowband filtering can be dominant in that case.

The approach presented advantageously shows that the performance improvement may be significantly larger for the combination of both technologies in comparison to using each of them separately. DPSK with a MLSE receiver and optimized phase demodulator can therefore be a feasible alternative for robust 10 Gb/s transponders as it combines a long reach with a favorable dispersion tolerance.

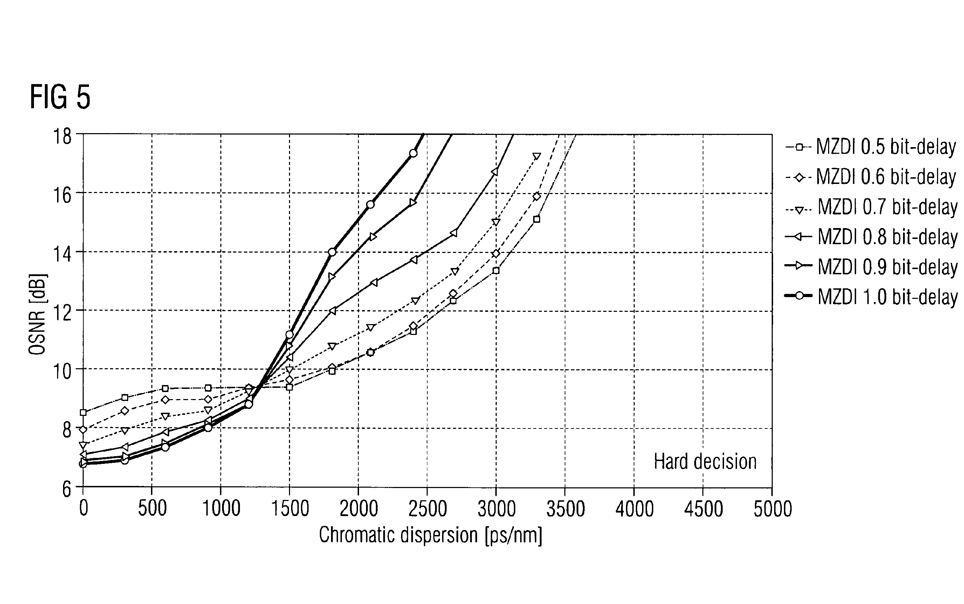

Fig.5 to Fig.9 each shows simulated and measured performance of the proposed combination of DPSK with shortened MZDI and either hard decision or MLSE reception.

According to **Fig.5**, there is a trade-off between the bit-delay in the MZDI and the resulting OSNR sensitivity / chromatic dispersion tolerance. For a shorter bit-delay the OSNR sensitivity is reduced and the chromatic dispersion tolerance increases. A preferable value for the bit-delay depends on the particular application and is also likely to change when the MLSE structure is optimized for such a system. Providing a large dispersion tolerance with still acceptable OSNR sensitivity penalty (for example 1.5dB penalty with respect to optimal DPSK) the bit-delay of the MZDI would be -0.65.

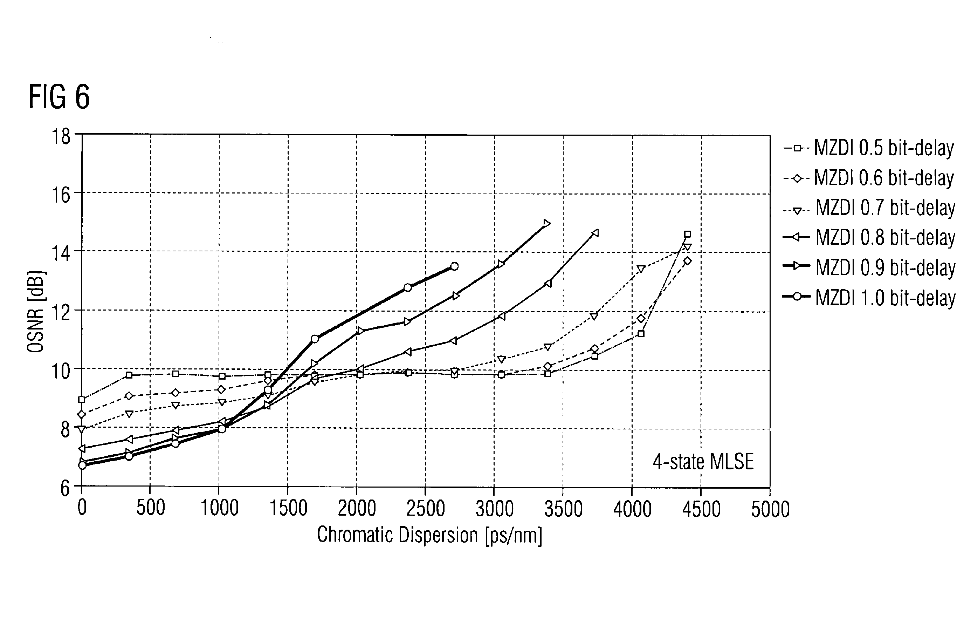

Fig.6 shows performances for a 4-state MLSE. Comparing these results with the results of Fig.5, the difference between hard decision and MLSE reception clearly shows the impact of combining a shortened MZDI with MLSE reception, as it nearly doubles the chromatic dispersion tolerance.

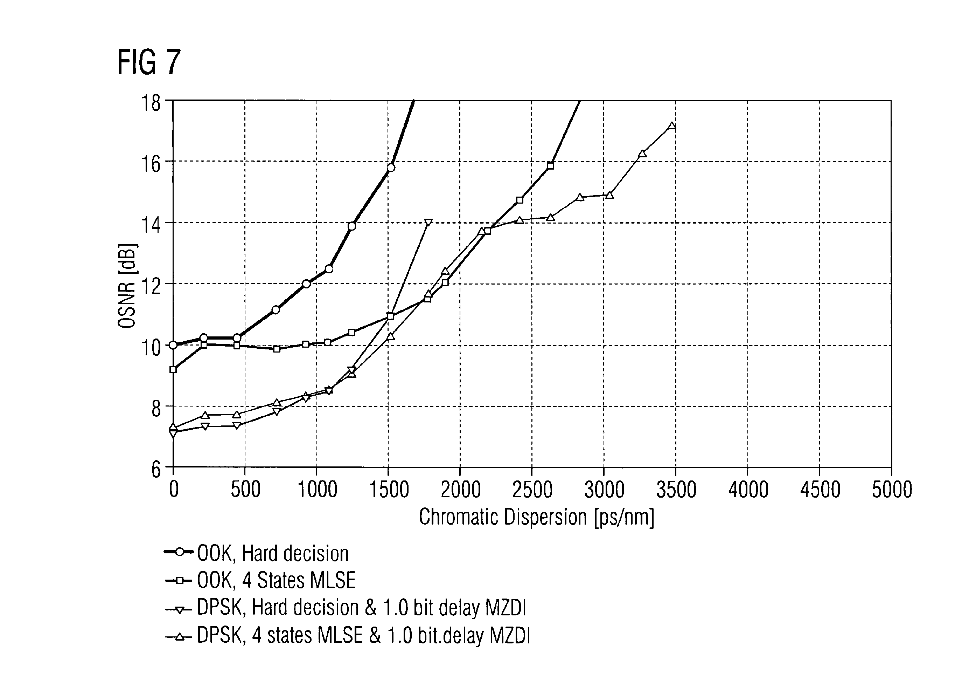

**Fig.7** shows a comparison between OOK and DPSK with and without MSLE detection. Comparing OOK and DPSK with hard detection shows a 3-dB improvement in OSNR sensitivity for DPSK. When OOK is combined with a 4-state MLSE, the dispersion tolerance is increased by a factor of about two.

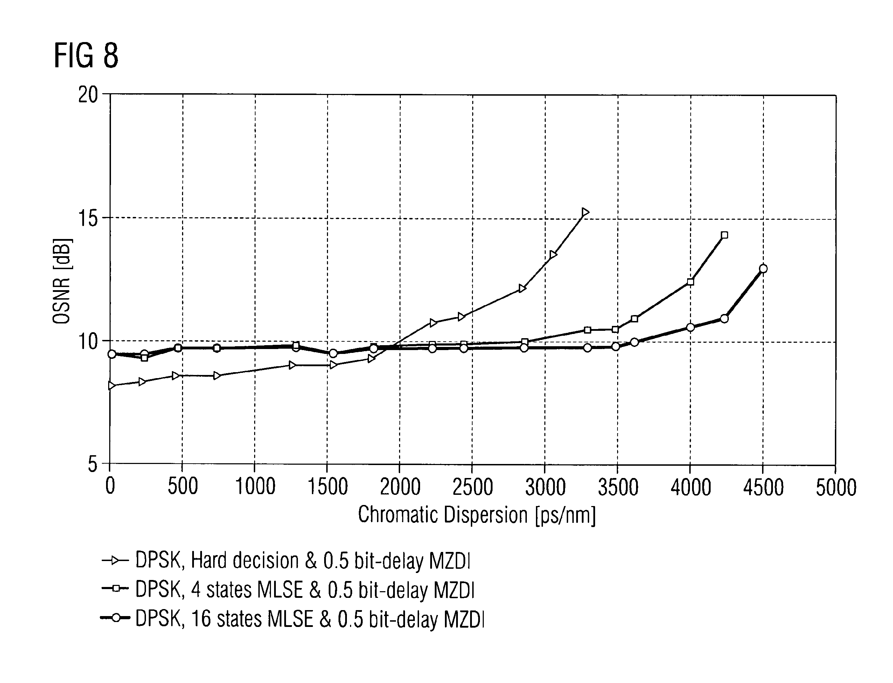

**Fig.8** shows an improvement resulting from using a 0.5 bit-delay MZDI with and without MLSE. In comparison to the results of Fig.7, Fig.8 exemplifies that the dispersion tolerance is clearly improved even for hard decision when a 0.5 bit-delay MZDI is used. In combination with MLSE, the performance improves even further and thus a considerably high dispersion tolerance can be reached. If the number of states in the MLSE is increased from 4 to 16, the dispersion tolerance will further increase. In general, a higher number of states in the MLSE may allow a further increase in dispersion tolerance.

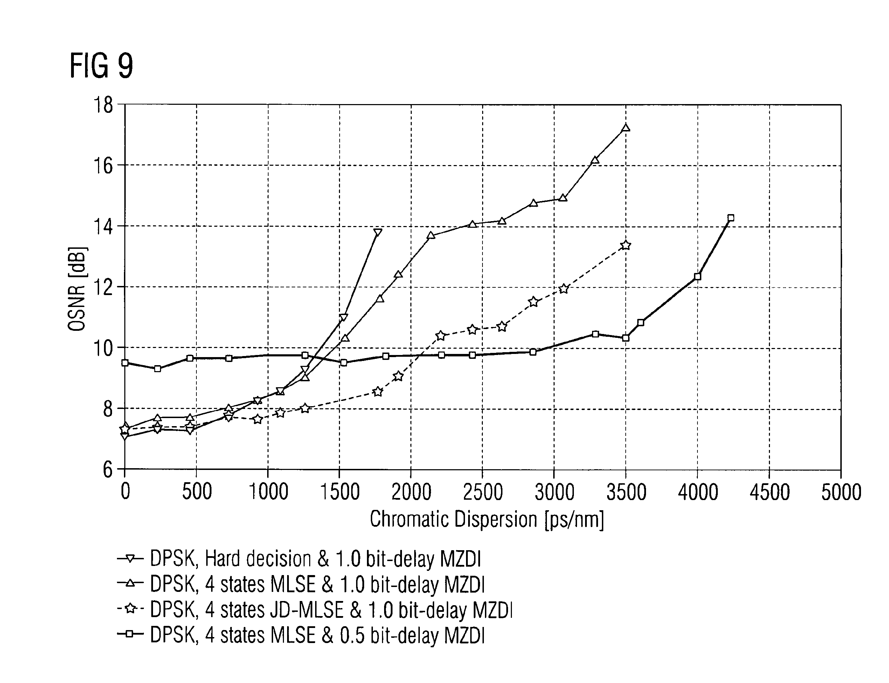

**Fig.9** compares different MLSE structures for DPSK modulation. Joint-symbol MLSE shows good performance. This, however, may be the result of a relatively complex MSLE structure with two inputs. DPSK with 0.5 bit-delay MZDI has a larger dispersion tolerance at the cost of a slightly reduced dispersion tolerance. Using a -0.65 bit-delay MZDI instead of a 0.5 bit-delay MZDI may reduce the OSNR sensitivity penalty while maintaining most of the dispersion tolerance. Since the shortened MZDI can be combined with standard MLSE structures, an upgrade may be provided in order to enhance both dispersion tolerance and OSNR sensitivity at a modest increase of the transponder's complexity.

### Further Advantages:

The combination of DPSK modulation with optimized phase demodulation and a MLSE receiver provides both an excellent reach (e.g., nonlinear tolerance and OSNR sensitivity) and chromatic dispersion tolerance.

This technology can help to increase the robustness of transmission systems in particular in the range of 10 Gb/s while keeping transponder complexity at an acceptable and cost-efficient level.

### Abbreviations:

- DPSK: differential phase shift keying
- MLSE: maximum likelihood sequence estimation
- MZDI: Mach-Zehnder delay interferometer
- OOK: on-off-keying
- OSNR: optical signal-to-noise ratio
- TDC: tunable dispersion compensation

## Claims

1. A receiver comprising
- a phase demodulator, and
- an electronic dispersion compensation that is connected to the phase demodulator,
wherein the phase demodulator comprises a delay that is less than 1 bit.

2. The receiver according to claim 1, wherein the phase demodulator comprises a Mach-Zehnder delay interferometer.

3. The receiver according to any of the preceding claims,
wherein the electronic dispersion compensation comprises a digital or an analog signal processing unit.

4. The receiver according to any of the preceding claims,
wherein the electronic dispersion compensation comprises a maximum likelihood sequence estimation.

5. The receiver according to any of the preceding claims,
wherein the electronic dispersion compensation comprises at least one digital or analog filter structure.

6. The receiver according to claim 5, wherein the at least one digital filter structure comprises at least one linear FIR-Filter and/or at least one nonlinear FIR-Filter.

7. The receiver according to any of the preceding claims comprising a unit for converting optical signals to electrical signals.

8. The receiver according to claim 7, wherein the unit for converting optical signals to electrical signals comprises a differential input stage.

9. The receiver according to any of claims 7 or 8, wherein the unit for converting optical signals to electrical signals comprises one optical converter or two optical converters.

10. The receiver according to claim 9, wherein the optical converter comprises at least one photo diode.

11. The receiver according to any of the preceding claims utilized in an optical network.

12. A method for operating the receiver according to any of the preceding claims.
